# FASCICULE DE BREVET EUROPEEN

(11) **EP 2 150 771 B1**
(45) Date de publication et mention de la délivrance du brevet: **04.09.2013**
(21) Numéro de dépôt: 08805586.8
(22) Date de dépôt: 19.05.2008
(51) Int. Cl.: G01B 11/16, G01L 1/24, G01D 5/353, G01M 11/08, G01L 5/00

(54) **DISPOSITIF INTEGRE DE SURVEILLANCE DES DEFORMATIONS D'UNE PIECE ELECTRIQUEMENT ISOLANTE ET PROCEDE DE FABRICATION D'UN TEL DISPOSITIF**
INTEGRIERTE VORRICHTUNG ZUR ÜBERWACHUNG DER VERFORMUNGEN EINES ELEKTRISCH ISOLIERTEN ELEMENTS UND VERFAHREN ZUR HERSTELLUNG EINER SOLCHEN VORRICHTUNG
INTEGRATED DEVICE FOR MONITORING THE DEFORMATIONS OF AN ELECTRICALLY INSULATING PART AND METHOD OF MANUFACTURING SUCH A DEVICE

(30) Priorité: 29.05.2007 FR 0703763
(43) Date de publication de la demande: 10.02.2010
(73) Titulaire: Schneider Electric Industries SAS, 92500 Rueil-Malmaison (FR)
(72) Inventeur: OHL, Brigitte, F-38800 Champagnier (FR); TEYSSIER, Sylvie, F-38050 Grenoble Cedex 9 (FR); AYMAMI, Joan, F-38000 Grenoble (FR)
(74) Mandataire: Mérigeault, Thierry Louis Henri
(86) Numéro de dépôt international: PCT/FR2008/000690
(87) Numéro de publication internationale: WO 2009/004137

(56) Documents cités:
- WO-A-03/076887
- US-B1- 7 154 081
- FERNANDO ET AL: "Fibre optic sensor systems for monitoring composite structures" REINFORCED PLASTICS, ELSEVIER ADVANCED TECHNOLOGY, NEW YORK, NY, US, vol. 49, no. 11, décembre 2005 (2005-12), pages 41-49, XP005203650 ISSN: 0034-3617

## Description

### DOMAINE TECHNIQUE DE L'INVENTION

L'invention relève du domaine des dispositifs de surveillance des déformations d'une structure mécanique.

L'invention concerne plus particulièrement un dispositif intégré de surveillance des déformations d'une pièce électriquement isolante pour installation électrique, ledit dispositif comprenant une fibre optique dans laquelle est formé au moins un premier réseau de Bragg.

L'invention concerne également une pièce électriquement isolante pour installation électrique formée dans un matériau composite, telle qu'une enceinte électriquement isolante destinée à recevoir des composants électriques.

L'invention concerne également un procédé de fabrication d'un dispositif intégré de surveillance des déformations d'une pièce électriquement isolante pour installation électrique.

### ETAT DE LA TECHNIQUE

Il est connu d'utiliser des fibres optiques comportant des réseaux de Bragg en les incorporant dans une structure mécanique afin de mesurer ou de détecter des déformations de cette structure. Le réseau de Bragg est généralement gravé sur la fibre optique et présente un motif périodique reproduit avec un certain pas permettant de définir une longueur d'onde caractéristique dudit réseau. L'envoi d'un signal lumineux incident dans cette fibre optique engendre des réflexions multiples par les motifs du réseau de Bragg, et en l'absence de déformation de ce réseau, le signal réfléchi présente une longueur d'onde sensiblement égale à la longueur d'onde caractéristique du réseau. Toute déformation de la partie de la fibre optique comportant le réseau de Bragg, telle qu'une dilatation ou une contraction, engendre une variation de la longueur d'onde du signal réfléchi qui est représentative de cette déformation. Ainsi, une partie de fibre optique comportant un réseau de Bragg peut être insérée dans une structure mécanique pour mesurer, détecter ou surveiller toute déformation de cette structure. Une particularité des réseaux de Bragg gravés dans les fibres optiques est qu'ils sont très sensibles aux moindres déformations ayant une amplitude inférieure à l'angstroem.

La demande de brevet français FR2791768 décrit un tel dispositif comportant un réseau de Bragg pour mesurer les déformations d'une structure à surveiller, ainsi que les moyens mis en oeuvre pour intégrer ce dispositif et le rendre solidaire de la structure à surveiller.

Les pièces électriquement isolantes utilisées dans les installations électriques, telles que des boîtiers ou des cuves destinés à recevoir des composants électriques, peuvent être soumises à des contraintes mécaniques. A titre d'exemple, ces contraintes mécaniques peuvent être générées par des variations de pression d'un gaz de coupure. Ces contraintes mécaniques peuvent également être générées par une plastification du matériau électriquement isolant à cause, par exemple, d'un fort taux d'humidité ambiante.

Les pièces électriquement isolantes utilisées dans les installations électriques peuvent aussi être soumises à des variations de température, par exemple des échauffements par les composants électriques de l'installation ou encore des variations des conditions environnementales.

Les pièces électriquement isolantes utilisées dans les installations électriques, telles que des boîtiers ou des cuves destinés à recevoir des composants électriques, sont généralement fabriquées dans un matériau composite à matrice thermodurcissable. Le matériau de ces pièces est généralement sensible aux variations de température, ce qui peut engendrer des déformations conduisant à des dommages pouvant être préjudiciables au bon fonctionnement des installations. De surcroît, le matériau de ces pièces électriquement isolantes présente une température de transition vitreuse qui peut, dans certaines conditions, être proche de la plage de température d'utilisation.

Un objet de la présente invention est donc de surveiller les déformations de ces pièces électriquement isolantes, telles que des boîtiers ou des cuves destinés à recevoir des composants électriques, afin de prévenir tout risque d'endommagement préjudiciable à l'installation. Un problème technique est la mise en oeuvre d'un dispositif de surveillance utilisant une fibre optique dans un matériau composite dont la matrice peut présenter une température de transition vitreuse proche de la température d'utilisation. Un autre problème technique est celui de l'intégration d'un tel dispositif dans une pièce électriquement isolante lors d'un processus de moulage s'accompagnant souvent de réactions exothermiques.

### EXPOSÉ DE L'INVENTION

L'invention vise à remédier aux problèmes techniques des dispositifs de l'art antérieur en proposant un dispositif intégré de surveillance des déformations d'une pièce électriquement isolante pour installation électrique, ledit dispositif comprenant une fibre optique dans laquelle est formé au moins un premier réseau de Bragg.

Dans le dispositif de surveillance selon l'invention, la pièce électriquement isolante est réalisée dans un matériau composite à matrice thermodurcissable, la fibre optique comporte une gaine de protection mécanique en matériau polyimide, et la fibre optique est recouverte d'un revêtement comportant au moins un composé de la matrice thermodurcissable.

De préférence, le revêtement est essentiellement de même composition que la matrice thermodurcissable de la pièce électriquement isolante.

Selon un mode de réalisation, la matrice thermodurcissable comporte au moins un composé choisi parmi l'époxy, les polyuréthanes, les phénoliques et les polyesters insaturés. De préférence, la matrice thermodurcissable comporte essentiellement un composé choisi parmi l'époxy, le polyuréthane et un polyester insaturé.

Selon un mode de réalisation préféré, la fibre optique comporte une portion dans laquelle est formé un second réseau de Bragg, ladite portion étant isolée mécaniquement de la pièce électriquement isolante. De préférence, la portion de la fibre dans laquelle est formé le second réseau de Bragg est recouverte d'une couche en élastomère. Avantageusement, la couche en élastomère présente une épaisseur comprise entre 0,05 et 0,7 fois le diamètre de la fibre optique.

L'invention concerne également une pièce électriquement isolante pour installation électrique formée dans un matériau composite dans laquelle le dispositif de surveillance décrit précédemment est intégré dans ladite pièce.

L'invention concerne également, une enceinte électriquement isolante, destinée à recevoir des composants électriques, formée dans un matériau composite dans laquelle le dispositif de surveillance décrit précédemment est intégré dans ladite enceinte.

L'invention concerne également un procédé de fabrication d'un dispositif intégré de surveillance des déformations d'une pièce électriquement isolante pour installation électrique, ledit procédé comprenant :
- une étape d'enrobage d'une fibre optique dans laquelle est formé au moins un premier réseau de Bragg par une composition d'enrobage comprenant au moins un composé de la matrice thermodurcissable de la pièce électriquement isolante,
- un positionnement d'une partie de la fibre optique dans laquelle est formé au moins un premier réseau de Bragg dans un moule pour former la pièce électriquement isolante, et
- le moulage de la pièce électriquement isolante.

De préférence, la composition d'enrobage est constituée essentiellement par les composés de la matrice thermodurcissable de la pièce électriquement isolante.

Selon un mode de réalisation du procédé de l'invention, l'étape d'enrobage comporte :
- un traitement de surface,
- l'application d'un agent promoteur d'adhésion,
- un trempage dans le matériau d'enrobage, et
- une étape de cuisson dudit matériau d'enrobage.

Selon un mode de réalisation, le procédé comporte une étape d'enrobage préalable d'une portion de la fibre, dans laquelle est formé un second réseau de Bragg, par une couche en élastomère. De préférence, l'étape d'enrobage préalable comporte :
- un traitement de surface,
- l'application d'un agent promoteur d'adhésion,
- un trempage dans le matériau d'enrobage, et
- une étape de cuisson dudit matériau d'enrobage.

De préférence, l'étape d'enrobage préalable comporte un masquage initial d'au moins une portion de la fibre optique dans laquelle est formé le premier réseau de Bragg.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.

La figure 1 représente un exemple de mise en oeuvre du dispositif intégré de surveillance selon l'invention sur la paroi d'une cuve ou d'un boîtier pour une installation électrique.

La figure 2 représente un premier mode de réalisation du dispositif selon l'invention comportant une fibre optique dans laquelle est formé un réseau de Bragg.

La figure 3 représente un second mode de réalisation du dispositif selon l'invention comportant une fibre optique dans laquelle sont formés deux réseaux de Bragg.

La figure 4 représente un algorithme du procédé de fabrication d'un dispositif de surveillance intégré selon la présente invention.

### DESCRIPTION DETAILLEE D'UN MODE DE RÉALISATION

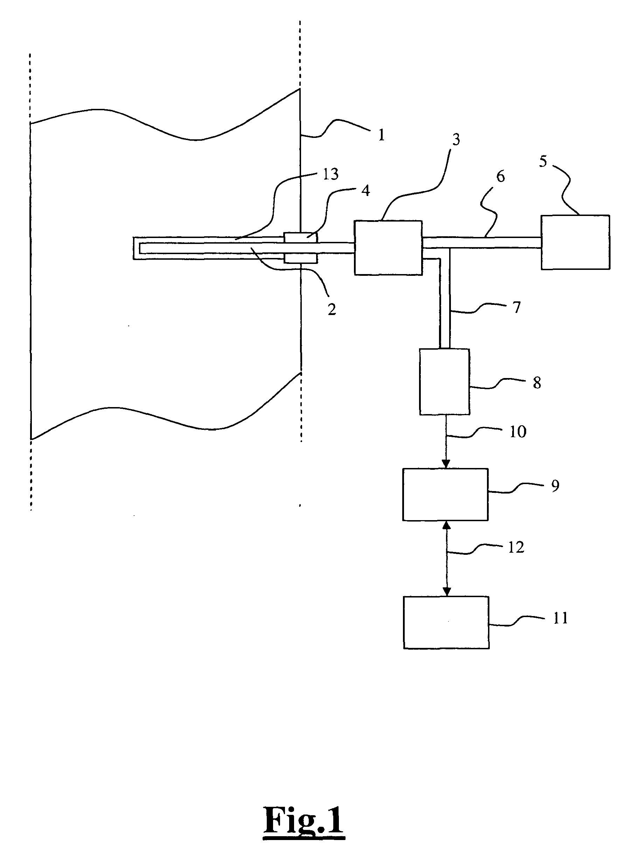

Comme cela est représenté à la figure 1, le dispositif de surveillance peut être intégré dans une pièce électriquement isolante telle que la paroi 1 d'un boîtier électrique, ce dernier n'étant représenté que partiellement. Le dispositif de surveillance peut être intégré à la paroi de toute enceinte ou enveloppe construite dans un matériau électriquement isolant. Le dispositif intégré dans la paroi du boîtier comprend une fibre optique 2 dans laquelle est formé au moins un réseau de Bragg. Cette fibre optique se prolonge à l'extérieur du boîtier jusqu'à des moyens de couplage optique 3 permettant de transmettre un signal lumineux incident et de recevoir un signal réfléchi généré par réflexion optique du signal lumineux incident sur les motifs du réseau de Bragg. Un joint de protection 4 est utilisé pour protéger la fibre optique 2. Ce joint peut être en téflon. Le signal lumineux incident est généré par une source lumineuse 5, par exemple une source laser ultraviolet accordable avec une longueur d'onde de 140 nanomètres avec une résolution de 1 picomètre. La source lumineuse peut être tout type de source connue de l'homme du métier. Le signal lumineux incident est transmis par des moyens de couplage optique 3 à l'aide d'une connexion par fibre optique 6 reliée audits moyens de couplage. Le signal réfléchi est, quant à lui, transmis à l'aide d'une connexion par fibre optique 7 qui est également couplée aux moyens de couplage 3. Le signal réfléchi est envoyé à l'aide de la connexion par fibre optique 7 vers des moyens de mesure 8 de spectre permettant, entre autres, de mesurer la longueur d'onde du signal réfléchi. Les moyens de mesure 8 sont connectés à des moyens de traitement 9 par une ligne 10, lesdits moyens de traitement permettant de déterminer une information de déformation telle qu'une mesure de déformation ou un dépassement d'une limite de déformation prédéterminée.

Dans le mode de réalisation représenté à la figure 1, les moyens de traitement 9 sont connectés à distance à une centrale 11 permettant de recueillir toute information de déformation issue, non seulement du dispositif intégré dans le boîtier 1, mais également d'autres dispositifs intégrés non représentés. La centrale 11 peut être connectée aux moyens de traitement 8 par tout moyen de communication 12 connu de l'homme du métier. Ainsi, les utilisateurs d'un tel dispositif de surveillance peuvent effectuer des surveillances, ponctuelles ou permanentes, sur site ou à distance. Ces opérations de surveillance peuvent être réalisées sur l'ensemble d'une installation, voire sur plusieurs installations.

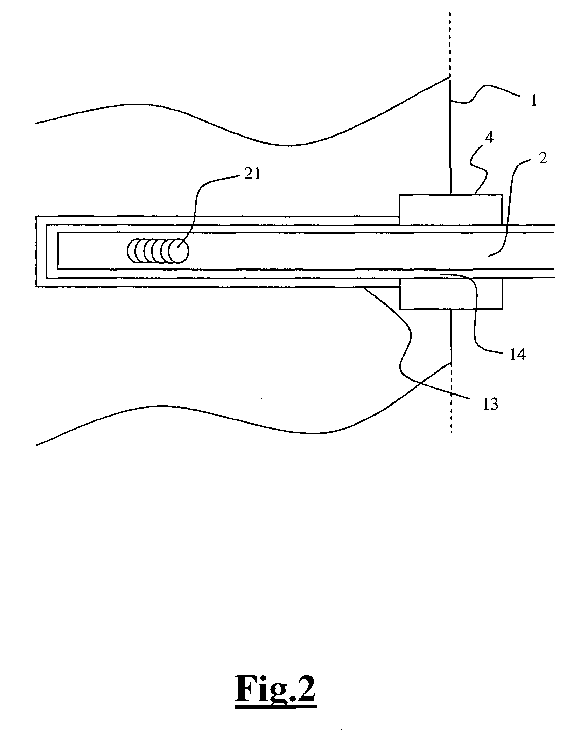

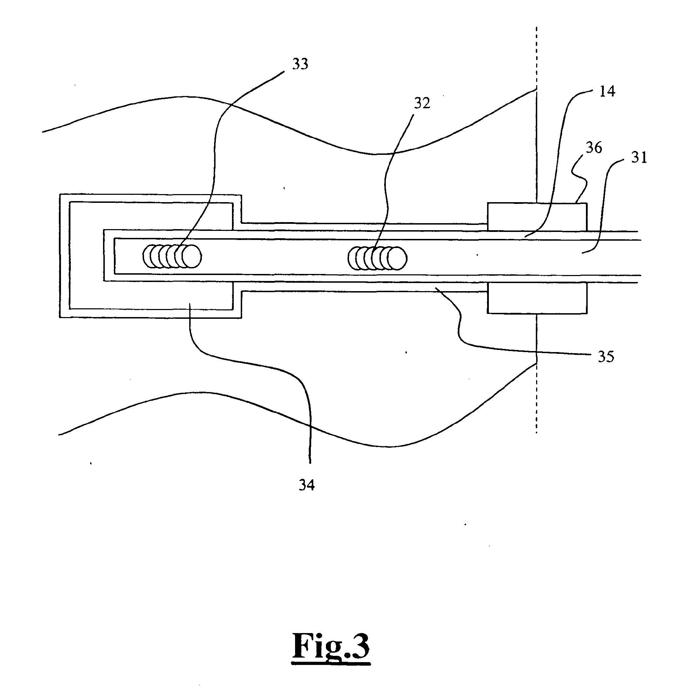

Selon un aspect de l'invention, la partie de la fibre optique comportant un réseau de Bragg est recouverte par une gaine de protection mécanique 14 en matériau polyimide, tel que représenté sur les figures 2 et 3. Généralement, la gaine de protection mécanique est disposée autour d'une gaine optique non représentée. Le matériau de cette gaine de protection mécanique est adapté à l'intégration du dispositif dans un matériau composite à matrice thermodurcissable. Le choix d'une gaine de protection mécanique en matériau polyimide permet également d'assurer une meilleure tenue en température lors de la fabrication par moulage de la pièce électriquement isolante et du dispositif intégré de surveillance. De surcroît, un tel matériau permet de résister plus longtemps à des variations de la température d'utilisation. En effet, les dispositifs intégrés de surveillance sont optimisés pour avoir une durée de vie d'au moins vingt cinq ans, durée pendant laquelle les effets de fatigue thermique d'une gaine en polyimide ne se font pas ressentir. Dans les modes de réalisation décrits, l'ensemble de la fibre optique est recouverte par une gaine de protection mécanique en matériau polyimide

Dans les modes de réalisation représentés sur les figures 1, 2 et 3, la fibre optique est recouverte d'un revêtement 13 comprenant au moins un composé de la matrice thermodurcissable de la pièce électriquement isolante. Le revêtement 13 permet de parfaire l'adhésion et l'interface entre la fibre optique comportant le réseau de Bragg d'une part, et le matériau de la pièce électriquement isolante d'autre part. Le matériau du revêtement permet d'assurer une continuité mécanique entre la fibre 2 et le matériau de la pièce électriquement isolante, de sorte que toute contrainte exercée sur ladite pièce est transmise à la fibre optique.

Le matériau de la pièce électriquement isolante est un matériau composite, c'est à dire un assemblage d'au moins un renfort qui assure la tenue mécanique et d'une matrice. La matrice est une résine thermodurcissable pouvant comporter au moins un composé choisi parmi l'époxy, les polyuréthanes, les phénoliques et les polyesters insaturés. Avantageusement, la matrice thermodurcissable comporte essentiellement de l'époxy ou du polyuréthane ou un polyester insaturé. Le renfort des pièces électriquement isolantes est, quant à lui, généralement essentiellement constitué par des particules minérales.

Le matériau des pièces électriquement isolantes dans lesquelles le dispositif de surveillance est intégré présente généralement une température de transition vitreuse. Ainsi, le coefficient de dilation varie significativement selon si la température est au-dessous ou au-dessus de la température de transition vitreuse. Dans certaines circonstances, le dispositif de surveillance peut être utilisé dans des conditions de fonctionnement proche de ou identique à la température de transition vitreuse. L'amplitude des déformations peut donc être importante et il est donc nécessaire d'assurer une bonne continuité mécanique entre le matériau composite de la pièce électriquement isolante et la fibre optique du dispositif intégré de surveillance.

Le revêtement 13 peut être essentiellement de même composition que la matrice thermodurcissable de la pièce électriquement isolante. Ceci permet d'assurer encore une meilleure continuité mécanique entre le matériau composite de la pièce électriquement isolante 1 et la fibre optique 2 du dispositif intégré de surveillance. Par ailleurs, la sélection d'un revêtement en matériau thermodurcissable permet d'assurer une meilleure tenue en température lors de la fabrication par moulage de la pièce électriquement isolante et du dispositif intégré de surveillance. En effet, la matrice thermodurcissable du revêtement 13 est préalablement durcie, ce qui lui confère une tenue en température améliorée lui permettant de résister à la cuisson lors du moulage ultérieur de la pièce électriquement isolante permettant l'intégration du dispositif de surveillance dans ladite pièce. Ceci est d'autant plus vrai que ce moulage s'accompagne d'un dégagement de chaleur important provoqué par les réactions exothermiques lors du durcissement de la matrice.

Dans le mode de réalisation représenté à la figure 3, la fibre optique 31 comporte un premier et un second réseau de Bragg, respectivement numérotés 32 et 33. La portion de la fibre optique dans laquelle est formé le second réseau de Bragg 33 est isolée mécaniquement de la pièce électriquement isolante à l'aide d'une couche en élastomère 34. La couche en élastomère 34 présente une épaisseur généralement comprise entre 0,05 et 0,7 fois le diamètre de la fibre optique. La fibre optique et la couche en élastomère, ainsi que le premier réseau de Bragg 32, sont recouverts d'un revêtement 35 comprenant au moins un composé de la matrice thermodurcissable, voire ayant une composition essentiellement identique à celle-ci. Le revêtement 35 recouvre essentiellement la partie de la fibre s'étendant entre l'extrémité incorporée dans la pièce électriquement isolante et le joint de protection en téflon 36.

Grâce à la couche en élastomère 34, toute déformation générée par des contraintes mécaniques exercées sur la pièce électriquement isolante n'engendre pas de déformation du second réseau de Bragg 33. La couche en élastomère 34 étant généralement conductrice de la chaleur, toute variation de température de la pièce électriquement isolante s'accompagne d'une déformation du réseau de Bragg 33. Ainsi, le réseau de Bragg 33 permet d'obtenir une information représentative de la température.

Comme dans le mode de réalisation de la figure 2, le premier réseau de Bragg 32 permet, grâce au revêtement 35 le recouvrant, d'obtenir une information représentative d'une déformation par contraintes mécaniques exercées sur la pièce électriquement isolante. Le revêtement 35 étant généralement dans un matériau conducteur de chaleur, le premier réseau de Bragg 32 permet également d'obtenir une information représentative de la température de la pièce électriquement isolante qui se superpose avec l'information représentative de la déformation par contraintes mécaniques.

Par un traitement approprié, il est possible de découpler les effets de la température de ceux des contraintes mécaniques. Il est donc possible de déterminer, à la fois une information représentative de la température, par l'intermédiaire du réseau 33, ainsi qu'une information représentative des contraintes mécaniques, par l'intermédiaire des deux réseaux. En effet, l'information représentative des contraintes mécaniques peut être obtenue par la différence entre les déformations mesurées par les réseaux 32 et 33.

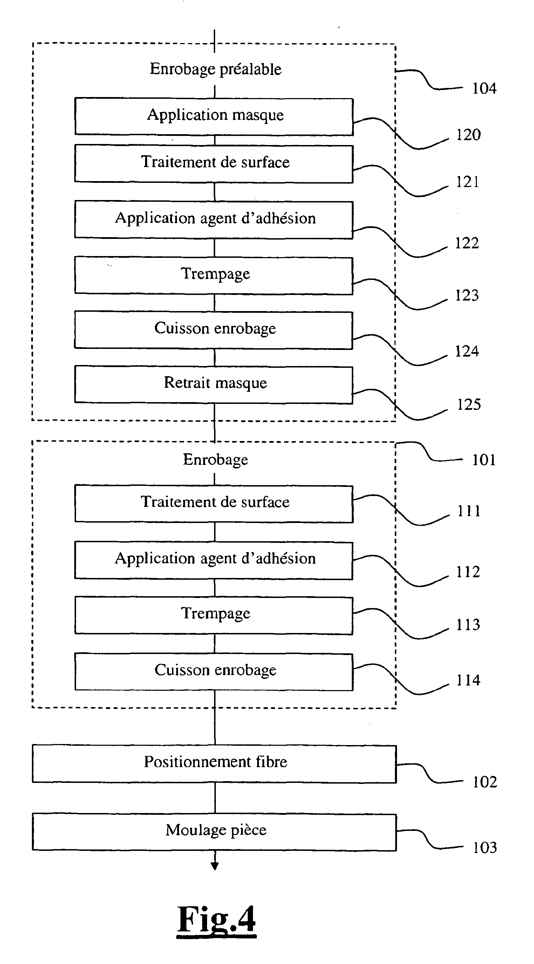

L'invention concerne également un procédé pour intégrer le dispositif de surveillance décrit précédemment. Comme cela est représenté à la figure 4, un mode du procédé de fabrication d'un dispositif intégré de surveillance comprend :
- une étape d'enrobage 101 de la fibre optique par une composition d'enrobage comprenant au moins un composé de la matrice thermodurcissable de la pièce électriquement isolante,
- un positionnement 102 d'une partie de la fibre optique enrobée dans laquelle est formé au moins un premier réseau de Bragg dans un moule pour former la pièce électriquement isolante, et
- le moulage 103 de la pièce électriquement isolante.

L'étape d'enrobage 101 concerne essentiellement la partie de la fibre optique destinée à être incorporée dans la pièce électriquement isolante, en l'occurrence la partie de la fibre s'étendant entre l'extrémité incorporée dans la pièce électriquement isolante et le joint de protection en téflon 4 ou 36.

Le moulage 103 de la pièce électriquement isolante peut être réalisé par tout moyen connu de l'homme du métier, telle qu'une coulée gravitationnelle.

La composition d'enrobage utilisée lors de l'étape d'enrobage 101 de la fibre optique peut être constituée essentiellement par les composés de la matrice thermodurcissable de la pièce électriquement isolante.

Dans le mode représenté à la figure 4, l'étape d'enrobage 101 comporte :
- un traitement de surface 111, de préférence nettoyage par solvant en bain ultrason,
- l'application d'un agent promoteur d'adhésion 112,
- un trempage dans le matériau d'enrobage 113, et
- une étape de cuisson dudit matériau d'enrobage 114.

L'agent promoteur d'adhésion de l'étape 112 peut être un composé à l'état liquide renfermant des fonctions acido-basiques ou un composé liquide appartenant à la famille des organo-silanes.

L'étape de trempage peut être réalisée par tout moyen connu de l'homme du métier, tel que le maintien dans un bain thermostaté avec une température et un temps d'immersion favorables à l'établissement d'une couche continue et d'épaisseur homogène.

L'étape de cuisson peut être réalisée par tout moyen connu de l'homme du métier, tel que dans un autoclave suivi par une cuisson dans une étuve.

Dans le cas d'une fibre optique comportant deux réseaux de Bragg, le procédé peut comporter une étape d'enrobage préalable 104, d'une portion de la fibre dans laquelle est formé un second réseau de Bragg, par une couche en élastomère. Cette étape d'enrobage préalable peut comporter :
- un masquage 120 d'au moins une portion de la fibre optique dans laquelle est formé le premier réseau de Bragg à l'aide d'un masque,
- un traitement de surface 121, de préférence nettoyage par solvant en bain ultrason,
- l'application d'un agent promoteur d'adhésion 122,
- un trempage dans le matériau d'enrobage 123,
- une étape de cuisson dudit matériau d'enrobage 124, par exemple dans un autoclave, et
- une étape 125 pour éliminer le masque.

L'étape de masquage 120 peut avantageusement être réalisée sur les parties de la fibre optique s'étendant de part et d'autre du second réseau de Bragg de façon à couvrir la partie de la fibre s'étendant entre l'extrémité incorporée dans la pièce électriquement isolante et le joint de protection en téflon 36, à l'exception du second réseau de Bragg. Ainsi, comme dans le mode de réalisation représenté à la figure 3, seul le second réseau de Bragg 33 est recouvert par la couche en élastomère 34.

Un avantage du dispositif de surveillance est de pouvoir prévenir toute défaillance critique pour la pérennité d'une ou de plusieurs pièces électriquement isolantes d'une installation électrique. Ces défaillances peuvent être d'origine thermique, par exemple lorsque la température est proche de la température de transition vitreuse de la matrice thermodurcissable. Ces défaillances d'origine thermique peuvent être provoquées par des échauffements de l'installation, par des conditions climatiques sévères ou par une combinaison des phénomènes. Ces défaillances peuvent également être générées par des contraintes mécaniques. Ces défaillances peuvent également être provoquées par une plastification du matériau de la pièce électrique isolante à cause d'une exposition prolongée à l'humidité. Ainsi, la mise en oeuvre de ces dispositifs de surveillance permet d'augmenter la fiabilité des installations électriques.

Un autre avantage du dispositif de surveillance est de permettre une surveillance locale ou à distance. Il est également possible de mettre en oeuvre une pluralité de dispositifs de surveillance et de réaliser une surveillance à distance à l'aide d'un centralisateur.

Un autre avantage du dispositif de surveillance est qu'il ne génère pas de phénomène électromagnétique pouvant avoir un impact sur le fonctionnement des composants électriques environnants.

Un autre avantage du dispositif de surveillance est qu'il présente une durée de vie du même ordre de grandeur que celles des installations électriques.

Un autre avantage du dispositif de surveillance est qu'il est de petite taille et qu'il peut facilement être intégré dans une pièce électriquement isolante réalisée dans un matériau composite à matrice thermodurcissable. Par ailleurs, ce matériau permet d'obtenir de bonnes performances de tenue mécanique, de tenue diélectrique, de résistance au feu et un fort niveau d'intégration.

Un autre avantage du mode de réalisation du dispositif de surveillance comportant deux réseaux de Bragg est qu'il permet de découpler les effets de la température de ceux des contraintes mécaniques.

Le dispositif de surveillance est avantageusement mis en oeuvre sur des boîtiers ou des cuves renfermant des composants électriques sous une pression d'un gaz diélectrique ou d'un gaz de coupure, tel que l'hexafluorure de soufre. L'utilisation du dispositif de surveillance est d'autant plus intéressante que le boîtier ou la cuve dans laquelle il est intégré comporte une membrane d'éclatement.

Le dispositif de surveillance est avantageusement utilisé dans des applications électrotechniques en moyenne tension, tel que dans des disjoncteurs, des sectionneurs ou des interrupteurs.

Le dispositif de surveillance peut être utilisé dans des applications autres comme les isolants de transformateurs, les installations éoliennes, ainsi que des applications en basse tension ou de puissance, par exemple des boîtiers électriques isolants.

## Revendications

1. Pièce électriquement isolante (1) pour installation électrique formée dans un matériau composite **caractérisée en ce qu'**elle comporte un dispositif intégré de surveillance des déformations de ladite pièce (1), ledit dispositif comprenant une fibre optique (2, 31) dans laquelle est formé au moins un premier réseau de Bragg (21, 32), la pièce électriquement isolante étant réalisée dans un matériau composite à matrice thermodurcissable, la fibre optique comportant une gaine de protection mécanique (14) en matériau polyimide, et la fibre optique étant recouverte d'un revêtement (13, 35) comportant au moins un composé de la matrice thermodurcissable.

2. Pièce électriquement isolante selon la revendication 1, **caractérisé en ce que** le revêtement (13, 35) est essentiellement de même composition que la matrice thermodurcissable de la pièce électriquement isolante.

3. Pièce électriquement isolante selon l'une des revendications 1 à 2, **caractérisé en ce que** la matrice thermodurcissable comporte au moins un composé choisi parmi l'époxy, les polyuréthanes, les phénoliques et les polyesters insaturés.

4. Pièce électriquement isolante selon la revendication 3, **caractérisé en ce que** la matrice thermodurcissable comporte essentiellement un composé choisi parmi l'époxy, le polyuréthane et un polyester insaturé.

5. Pièce électriquement isolante selon l'une des revendications 1 à 4, **caractérisé en ce que** la fibre optique (2, 31) comporte une portion dans laquelle est formé un second réseau de Bragg (33), ladite portion étant isolée mécaniquement de la pièce électriquement isolante.

6. Pièce électriquement isolante selon la revendication 5, **caractérisé en ce que** la portion de la fibre dans laquelle est formé le second réseau de Bragg est recouverte d'une couche en élastomère (34).

7. Pièce électriquement isolante selon la revendication 6, **caractérisé en ce que** la couche en élastomère (34) présente une épaisseur comprise entre 0,05 et 0,7 fois le diamètre de la fibre optique.

8. pièce électriquement isolante selon l'une des revendications 1 à 7, **caracterisée en ce qu'**elle est intégrée dans une enceinte électriquement isolante, destinée à recevoir des composants électriques.

9. Procédé de fabrication d'une pièce électriquement isolante pour installation électrique formée dans un matériau composite comportant un dispositif intégré de surveillance des déformations, ledit procédé comprenant :
- une étape d'enrobage (101) d'une fibre optique dans laquelle est formé au moins un premier réseau de Bragg par une composition d'enrobage comprenant au moins un composé de la matrice thermodurcissable de la pièce électriquement isolante,
- un positionnement (102) d'une partie de la fibre optique dans un moule pour former la pièce électriquement isolante, et
- le moulage (103) de la pièce électriquement isolante.

10. Procédé selon la revendication 9 **caractérisé en ce que** la composition d'enrobage est constituée essentiellement par les composés de la matrice thermodurcissable de la pièce électriquement isolante.

11. Procédé selon l'une des revendications 9 ou 10 **caractérisé en ce que** l'étape d'enrobage comporte :
- un traitement de surface (111),
- l'application d'un agent promoteur d'adhésion (112),
- un trempage (113) dans le matériau d'enrobage, et
- une étape de cuisson (114) dudit matériau d'enrobage.

12. Procédé selon l'une des revendications 9 à 11, **caractérisé en ce qu'**il comporte une étape d'enrobage préalable (104) d'une portion de la fibre, dans laquelle est formé un second réseau de Bragg, par une couche en élastomère.

13. Procédé selon la revendication 12, **caractérisé en ce que** l'étape d'enrobage préalable (104) comporte :
- un traitement de surface (121),
- l'application d'un agent promoteur d'adhésion (122),
- un trempage (123) dans le matériau d'enrobage, et
- une étape de cuisson (124) dudit matériau d'enrobage.

14. Procédé selon la revendication 13, **caractérisé en ce que** l'étape d'enrobage préalable comporte un masquage initial (120) d'au moins une portion de la fibre optique dans laquelle est formé le premier réseau de Bragg.

## Patentansprüche

1. In einen Verbundwerkstoff eingebettetes Isolierstoffteil (1) für eine Elektroinstallation, **dadurch gekennzeichnet, dass** es eine integrierte Einrichtung zur Überwachung der Verformung des genannten Teils (1) umfasst, welche Einrichtung eine Lichtleitfaser (2, 31) umfasst, in die mindestens ein Bragg-Gitter (21, 32) eingeschrieben ist, wobei das Isolierstoffteil in einen Verbundwerkstoff mit Duroplastmatrix eingebettet ist, die Lichtleitfaser eine mechanische Schutzhülle (14) aus einem Polyimidwerkstoff umfasst und die Lichtleitfaser mit einer Beschichtung (13, 35) versehen ist, die mindestens eine Komponente der Duroplastmatrix enthält.

2. Isolierstoffteil nach Anspruch 1, **dadurch gekennzeichnet, dass** die Beschichtung (13, 35) im Wesentlichen die gleiche Zusammensetzung aufweist wie die Duroplastmatrix des Isolierstoffteils.

3. Isolierstoffteil nach Anspruch 1 oder 2, **dadurch gekennzeichnet, dass** die Duroplastmatrix mindestens eine Komponente vom Typ Epoxydharz, Polyurethan, Phenol oder ungesättigtes Polyester umfasst.

4. Isolierstoffteil nach Anspruch 3, **dadurch gekennzeichnet, dass** die Duroplastmatrix hauptsächlich eine Komponente vom Typ Epoxydharz, Polyurethan oder ungesättigtes Polyester umfasst.

5. Isolierstoffteil nach einem der Ansprüche 1 bis 4, **dadurch gekennzeichnet, dass** die Lichtleitfaser (2, 31) einen Abschnitt umfasst, in den ein zweites Bragg-Gitter (33) eingeschrieben ist und der mechanisch vom Isolierstoffteil getrennt ist.

6. Isolierstoffteil nach Anspruch 5, **dadurch gekennzeichnet, dass** der Abschnitt der Lichtleitfaser, der das zweite Bragg-Gitter enthält, mit einer Elastomerschicht (34) überzogen ist.

7. Isolierstoffteil nach Anspruch 6, **dadurch gekennzeichnet, dass** die Elastomerschicht (34) eine Dicke zwischen dem 0,05-Fachen und dem 0,7-Fachen des Durchmessers der Lichtleitfaser aufweist.

8. Isolierstoffteil nach einem der Ansprüche 1 bis 7, **dadurch gekennzeichnet, dass** es in ein Isolierstoffgehäuse integriert ist, das zur Aufnahme elektrischer Bauteile dient.

9. Verfahren zur Herstellung eines, in einen Verbundwerkstoff mit einer Einrichtung zur Überwachung von Verformungen eingebetteten Isolierstoffteils für eine Elektroinstallation, welches Verfahren
- einen Schritt zum Aufbringen eines Überzugs (101) auf einer Lichtleitfaser, in die mindestens ein erstes Bragg-Gitter eingeschrieben ist, wobei die Zusammensetzung des Überzugs mindestens eine Komponente der Duroplastmatrix des Isolierstoffteils umfasst,
- das Einsetzen (102) eines Abschnitts der Lichtleitfaser in eine Gießform zur Herstellung des Isolierstoffteils sowie
- das Gießen (103) des Isolierstoffteils umfasst.

10. Verfahren nach Anspruch 9, **dadurch gekennzeichnet, dass** der Überzug im Wesentlichen aus den Komponenten der Duroplastmatrix des Isolierstoffteils zusammengesetzt ist.

11. Verfahren nach einem der Ansprüche 9 oder 10, **dadurch gekennzeichnet, dass** der Schritt zum Aufbringen eines Überzugs
- eine Oberflächenbehandlung (111),
- das Aufbringen eines Haftvermittlers (112),
- das Eintauchen (113) in das Überzugsmaterial sowie
- einen Schritt zum Aushärten (114) des genannten Überzugsmaterials umfasst.

12. Verfahren nach einem der Ansprüche 9 bis 11, **dadurch gekennzeichnet, dass** es einen vorherigen Schritt zum Aufbringen eines Überzugs (104) in Form einer Elastomerschicht auf einem Abschnitt der Lichtleitfaser umfasst, in den ein zweites Bragg-Gitter eingeschrieben ist.

13. Verfahren nach Anspruch 12, **dadurch gekennzeichnet, dass** der vorherige Schritt zum Aufbringen eines Überzugs (104)
- eine Oberflächenbehandlung (121),
- das Aufbringen eines Haftvermittlers (122),
- das Eintauchen (123) in das Überzugsmaterial sowie
- einen Schritt zum Aushärten (124) des genannten Überzugsmaterials umfasst.

14. Verfahren nach Anspruch 13, **dadurch gekennzeichnet, dass** der vorheriger Schritt zum Aufbringen eines Überzugs eine Anfangsmaskierung (120) mindestens eines Abschnitts der Lichtleitfaser umfasst, in den das erste Bragg-Gitter eingeschrieben ist.

## Claims

1. An electrically insulating part (1) for an electrical installation formed in a composite material, **characterized in that** it comprises an integrated device for monitoring deformations of said part (1), said device comprising an optic fibre (2, 31) in which at least a first Bragg grating (21, 32) is formed, the electrically insulating part being made from a composite material with a thermosetting matrix, the optic fibre comprising a mechanical protection sleeve (14) made from polyimide material, and the optic fibre being covered by a coating (13, 35) comprising at least one compound of the thermosetting matrix.

2. The electrically insulating part according to claim 1, **characterized in that** the coating (13, 35) is essentially of the same composition as the thermosetting matrix of the electrically insulating part.

3. The electrically insulating part according to one of claims 1 to 2, **characterized in that** the thermosetting matrix comprises at least one compound chosen from epoxy, polyurethanes, phenolics and unsaturated polyesters.

4. The electrically insulating part according to claim 3, **characterized in that** the thermosetting matrix essentially comprises a compound chosen from epoxy, polyurethanes and an unsaturated polyester.

5. The electrically insulating part according to one of claims 1 to 4, **characterized in that** the optic fibre (2, 31) comprises a portion in which a second Bragg grating (33) is formed, said portion being mechanically insulated from the electrically insulating part.

6. The electrically insulating part according to claim 5, **characterized in that** the portion of the fibre in which the second Bragg grating is formed is covered by an elastomer layer (34).

7. The electrically insulating part according to claim 6, **characterized in that** the elastomer layer (34) presents a thickness comprised between 0.05 and 0.7 times the diameter of the optic fibre.

8. An electrically insulating part according to one of claims 1 to 7, **characterized in that** it is integrated in an electrically insulating enclosure designed to accommodate electric components.

9. A method for manufacturing an electrically insulating part for an electrical installation formed in a composite material comprising an integrated device for monitoring deformations, said method comprising:
- step (101) of coating an optic fibre in which at least a first Bragg grating is formed by a coating composition comprising at least one compound of the thermosetting matrix of the electrically insulating part,
- positioning (102) of a part of the optic fibre in a mould to form the electrically insulating part, and
- moulding (103) of the electrically insulating part.

10. The method according to claim 9 **characterized in that** the coating composition is essentially formed by the compounds of the thermosetting matrix of the electrically insulating part.

11. The method according to one of claims 9 or 10 **characterized in that** the coating step comprises:
- surface treatment (111),
- application of an adhesion-promoting agent (112),
- dipping (113) in the coating material, and
- a baking step (114) of said coating material.

12. The method according to one of claims 9 to 11, **characterized in that** it comprises a prior step (104) of coating a portion of the fibre, in which a second Bragg grating is formed, with an elastomer layer.

13. The method according to claim 12, **characterized in that** the prior coating step (104) comprises:
- surface treatment (121),
- application of an adhesion-promoting agent (122),
- dipping (123) in the coating material, and
- a baking step (124) of said coating material.

14. The method according to claim 13, **characterized in that** the prior coating step comprises initial masking (120) of at least a portion of the optic fibre in which the first Bragg grating is formed.
